# EUROPÄISCHE PATENTANMELDUNG

(11) **EP 4 778 670 A1**
(43) Veröffentlichungstag der Anmeldung: **22.07.2026**
(21) Anmeldenummer: 26151424.4
(22) Anmeldetag: 12.01.2026
(51) Int. Cl.: B23P 6/00, B23P 6/04, F16B 37/14

(54) **VERFAHREN UND REPARATURKIT ZUM WIEDERHERSTELLEN EINER BEFESTIGUNGSANORDNUNG, REPARATURKIT, REPARIERTE BEFESTIGUNGSANORDNUNG SOWIE TRIEBWERK FÜR EIN FLUGZEUG**

(30) Priorität: 16.01.2025 DE 102025101407
(71) Anmelder: MTU Aero Engines AG, 80995 München (DE)
(72) Erfinder: Schnitzler, Jörg, 80995 München (DE)

(57) **Zusammenfassung**

Die Erfindung betrifft ein Verfahren und ein Reparaturkit (1) zum Reparieren einer Befestigungsanordnung, bei der ein mit einem ersten Bauteil (4) der Befestigungsanordnung verbundener Stehbolzen der Befestigungsanordnung abgebrochen ist. Es wird das Reparaturschraubelement (14) des Reparaturkits (1) mit einer Schraubelementhülse (20) und einem damit verbundenen Schraubelementkopf (21) bereitgestellt. Ein Hülseninnengewinde (22) der Schraubelementhülse (20) korrespondiert zum Bilden einer Reparaturgewindeverbindung (23) mit einem Außengewinderest (8) eines Stehbolzenrests (5) des vormaligen Stehbolzens. Zwischen dem Außengewinderest (8) und dem Reparaturschraubelement (14) wird die Reparaturgewindeverbindung (23) gebildet, indem die Schraubelementhülse (20) durch eine Öffnungsanordnung (31) einer Teileanordnung (9) hindurch und mittels des Hülseninnengewindes (22) mit dem Außengewinderest (8) verschraubt wird, wobei die Teileanordnung (9) zwischen dem Schraubelementkopf (21) und dem ersten Bauteil (4) der reparierten Befestigungsanordnung (2) eingespannt wird. Zudem betrifft die Erfindung die reparierte Befestigungsanordnung (2), die den abgebrochenen Stehbolzen und das Reparaturkit (1) aufweist, sowie ein die reparierte Befestigungsanordnung (2) aufweisendes Triebwerk (3) für ein Flugzeug.

## Beschreibung

Die Erfindung betrifft ein Verfahren zum Reparieren einer Befestigungsanordnung mittels eines Reparaturkits sowie das Reparaturkit an sich. Des Weiteren betrifft die Erfindung eine reparierte Befestigungsanordnung, die einen abgebrochenen Stehbolzen und das Reparaturkit aufweist. Weiter betrifft die Erfindung ein Triebwerk für ein Flugzeug, wobei das Triebwerk die reparierte Befestigungsanordnung aufweist.

Bei Reparaturen/Wartungsarbeiten von Flugzeugen ist es von äußerster Wichtigkeit, die erforderlichen Arbeiten schnell zu erledigen, um unerwünschte Nichtflugzeiten des zu wartenden bzw. zu reparierenden Flugzeugs möglichst geringzuhalten. Langwierige Arbeiten, insbesondere ein Abmontieren eines Triebwerks vom Flugzeug, sollen nach Möglichkeit vermieden und lediglich im Rahmen einer geplanten Überholung erfolgen. Kommt es dazu, dass ein nicht sicherheitskritisches Bauteil des Flugzeugs beschädigt ist, und das Bauteil nur unter erheblichem Aufwand, insbesondere unter Abmontieren des Triebwerks, gegen ein Neuteil ersetzt werden kann, kann es behelfsmäßig repariert werden. Dann ist aber in Kauf zu nehmen, dass die nächste Überholung länger dauert, um das beschädigte Bauteil gegen ein entsprechendes Neuteil zu ersetzen. Zudem ist die behelfsmäßige Reparatur mit eigenen Sicherheits- bzw. Überwachungselementen zu versehen, um den Bestand der behelfsmäßigen Reparatur zu gewährleisten bzw. regelmäßig zu kontrollieren.

So kann es zum Beispiel dazu kommen, dass ein nur unter erheblichem Aufwand ausbaubarer Stehbolzen, auf den eine Mutter aufgeschraubt ist, abreißt, sodass eine passende Mutter zunächst nicht mehr auf den abgebrochenen oder abgerissenen Stehbolzen aufgeschraubt werden kann. Als Behelfsreparatur können zunächst weniger relevante Bauteile, zum Beispiel Unterlegscheiben etc., entfernt werden und eine neue Mutter auf die dann noch erreichbaren Gewindegänge (meist nur ein bis zwei) aufgeschraubt werden. Als Sicherheits- bzw. Überwachungsmaßnahme kommt es beispielsweise in Frage, mittels eines visuellen Verdrehungs- bzw. Lockerungsindikators (etwa mithilfe eines Schraubensicherungslacks) ein unerwünschtes Verdrehen der auf den abgerissenen Stehbolzen behelfsmäßig aufgeschraubten Mutter visuell festzustellen. Jedoch ist bei der nächsten Überholung die Behelfsreparatur aufzulösen, also der Originalzustand wiederherzustellen, und der abgerissene Stehbolzen gegen einen neuen Stehbolzen auszutauschen. Dadurch entsteht zusätzlicher Aufwand bei der Überholung, ganz besonders dann, wenn zum Austauschen des abgerissenen Stehbolzens das Triebwerk abmontiert werden muss, das Wiederherstellen des Originalzustands also nicht on-wing erfolgen kann.

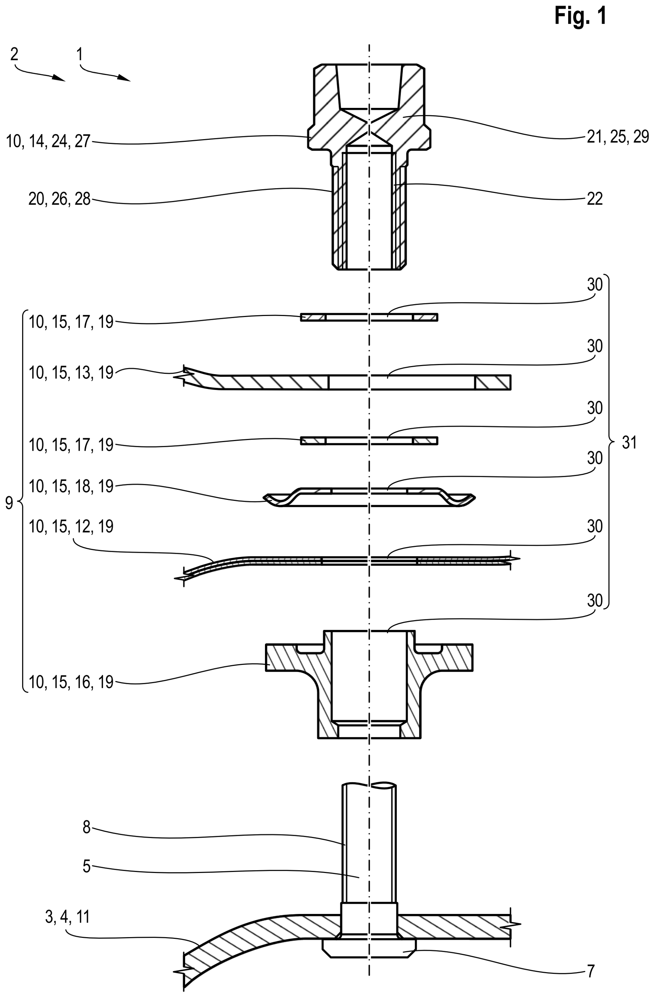

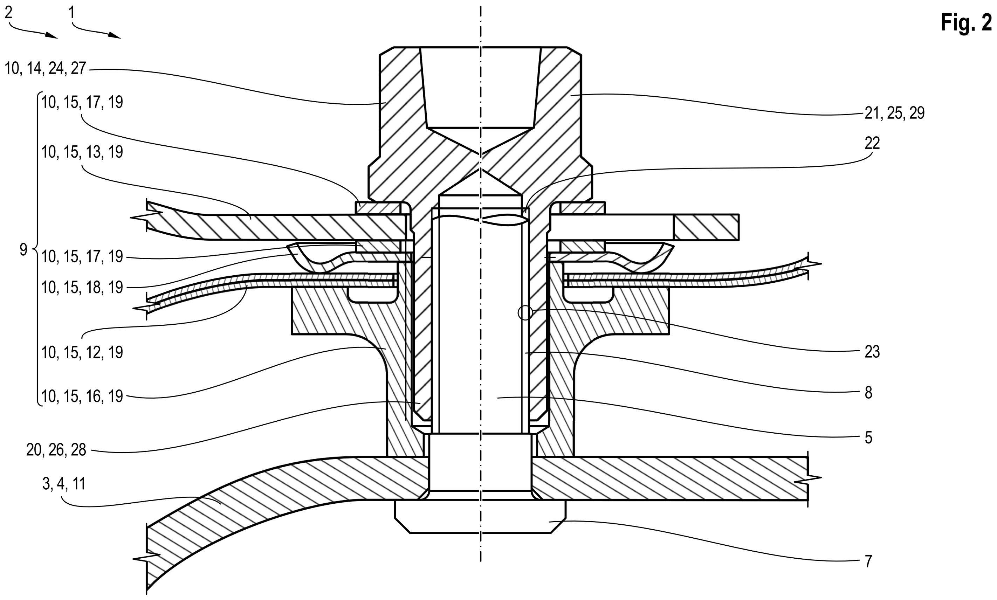

Ein Reparaturverfahren ist aus der WO2022/031712A1 bekannt. Die Fig. 3 der WO2022/031712A1 zeigt dabei einen frei zugänglichen Überrest eines Bolzens, nachdem eine Mutter von diesem Überrest (wie in Fig. 2 gezeigt) entfernt wurde und nachdem ein äußerer Bolzenabschnitt (wie in Fig. 1 gezeigt) abgetrennt wurde.

Aufgabe der vorliegenden Erfindung ist es, eine beschädigte Befestigungsanordnung, insbesondere in/an einem Flugzeug, möglichst effizient zu reparieren, wobei die reparierte Befestigungsanordnung von vergleichbarer Stabilität wie die ursprüngliche Befestigungsanordnung ist. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird gemäß der Erfindung ein Verfahren zum Reparieren einer Befestigungsanordnung vorgeschlagen, bei welcher ein Stehbolzen der Befestigungsanordnung abgebrochen ist. Beim erfindungsgemäßen Verfahren, das heißt zum Reparieren der Befestigungsanordnung wird ein Reparaturkit eingesetzt, das ein Reparaturschraubelement aufweist.

Die unbeschädigte Befestigungsanordnung, also die Befestigungsanordnung im Originalzustand, weist ein erstes Bauteil auf, an welchem der Stehbolzen fixiert ist. Des Weiteren umfasst die unbeschädigte Befestigungsanordnung eine Innengewindemutter sowie eine Teileanordnung, die ein Teil oder zwei oder mehr Teile aufweist, wobei die Teileanordnung zwischen dem ersten Bauteil und der Innengewindemutter eingespannt ist. Dabei erstreckt der Stehbolzen sich durch eine Öffnungsanordnung der Teileanordnung hindurch, und die Innengewindemutter ist unter Nutzung einer Vielzahl an Gewindegängen des Stehbolzens (insbesondere mehr als drei Gewindegänge) mit dem Stehbolzen bzw. dessen Stehbolzenaußengewinde verschraubt. Insbesondere sind der Stehbolzen und die Innengewindemutter derart miteinander verschraubt, dass der Stehbolzen sich durch die gesamte Innengewindemutter axial hindurcherstreckt, sodass alle Gewindegänge der Innengewindemutter belegt sind.

Bei der beschädigten Befestigungsanordnung ist der mit dem ersten Bauteil fest verbundene Stehbolzen abgebrochen oder abgerissen, beispielsweise unter Aufbringen einer Losschraubkraft auf die mit dem Stehbolzen verschraubte Innengewindemutter. Infolgedessen ragt ein weiterhin mit dem ersten Bauteil drehfest verbundener Stehbolzenrest des vormaligen Stehbolzens durch die Öffnungsanordnung der Teileanordnung nicht oder nicht wesentlich über die Teileanordnung hinaus. Der Stehbolzenrest weist weiterhin einen freien Außengewinderest auf, der jedoch in der Öffnungsanordnung angeordnet ist, das heißt weitgehend in der Teileanordnung versenkt, sodass oberhalb der Teileanordnung eine Innengewindemutter nicht oder nur unter Nutzung eines geringen Bruchteils der Gewindegänge (insbesondere nur drei oder weniger) auf den Stehbolzenrest aufschraubbar ist.

Das Verfahren wird insbesondere an der beschädigten Befestigungsanordnung angewendet, wobei in einem Verfahrensschritt das Reparaturschraubelement des Reparaturkits mit einer Schraubelementhülse und einem damit fest verbundenen Schraubelementkopf bereitgestellt wird. Die Schraubelementhülse wird mit einem Hülseninnengewinde bereitgestellt, das zum Bilden einer Reparaturgewindeverbindung mit einem Außengewinderest des Stehbolzenrests korrespondiert. Des Weiteren ist die Schraubelementhülse länglich, beispielsweise mindestens so lang wie die Innengewindemutter oder länger. Das Reparaturschraubelement wird zum Beispiel derart bereitgestellt, dass die Schraubelementhülse und der Schraubelementkopf einstückig miteinander ausgebildet sind. Alternativ kann das Reparaturschraubelement durch zwei oder mehr voneinander separat hergestellte Einzelkomponenten bereitgestellt werden, etwa als eine Stange mit einem Stangenaußengewinde und eine mit dem Stangenaußengewinde korrespondierende Schraubmutter. Die Schraubelementhülse und der Schraubelementkopf können kraft-, form- und/oder stoffschlüssig miteinander verbunden oder einstückig miteinander ausgebildet bereitgestellt werden, können aber auch im Rahmen des Verfahrens miteinander kraft-, form- und/oder stoffschlüssig miteinander verbunden werden.

Es wird dann in einem weiteren Verfahrensschritt zwischen dem Außengewinderest und dem Reparaturschraubelement die Reparaturgewindeverbindung gebildet, indem die Schraubelementhülse durch die Öffnungsanordnung der Teileanordnung hindurch und mittels des Hülseninnengewindes mit dem Außengewinderest verschraubt wird. Dadurch wird die Teileanordnung zwischen dem Schraubelementkopf des Reparaturschraubelements und dem ersten Bauteil der Befestigungsanordnung erneut eingespannt.

Auf diese Weise wird die beschädigte Befestigungsanordnung besonders effizient repariert, wobei aus der beschädigten Befestigungsanordnung die reparierte Befestigungsanordnung hergestellt wird, welche eine vergleichbare, das heißt eine mindestens gleiche Stabilität wie die ursprüngliche Befestigungsanordnung oder eine höhere Stabilität als die ursprüngliche Befestigungsanordnung, aufweist. Denn mittels der Schraubelementhülse werden in der Reparaturgewindeverbindung die in der Teileanordnung bzw. Öffnungsanordnung angeordneten und mit einer normalen Mutter nicht zu erreichende Gewindegänge genutzt. Insbesondere sind so viele Gewindegänge des Stehbolzenrests in Nutzung wie bei einer ursprünglichen Schraubverbindung zwischen dem unbeschädigten Stehbolzen und der Innengewindemutter der Befestigungsanordnung im Originalzustand. Wird das Reparaturschraubelement mit einer entsprechend langen Schraubelementhülse bereitgestellt, können mehr Gewindegänge des Stehbolzenrests als bei der ursprünglichen Schraubverbindung zwischen dem unbeschädigten Stehbolzen und der Innengewindemutter genutzt werden.

Gemäß einer weiteren möglichen Ausführungsform des Verfahrens bleiben der Stehbolzenrest und das erste Bauteil während des Reparierens der Befestigungsanordnung miteinander verbunden bzw. aneinander fest fixiert. Das bedeutet, durch den Stehbolzenrest wird ein Bestandteil der reparierten Befestigungsanordnung gebildet. Der abgebrochene Stehbolzen wird im Verfahren also nicht gegen ein Neuteil ersetzt. Folglich wird der abgebrochene Stehbolzen nicht ausgebaut, weswegen alle Tätigkeiten entfallen, die zum Ausbauen des Stehbolzenrests erforderlich sind. Stattdessen wird der Stehbolzenrest zum Herstellen der Reparaturgewindeverbindung bzw. der reparierten Befestigungsanordnung eingesetzt. Dadurch ist dem Gedanken an ein besonders schnelles und effizientes Reparieren der Befestigungsanordnung in besonderem Maße Rechnung getragen.

Gemäß einer Ausführungsform erstreckt sich der Außengewinderest zumindest abschnittsweise durch die Öffnungsanordnung der Teileanordnung. Dabei muss sich der Außengewinderest aber nicht oder nicht wesentlich über die Teileanordnung hinaus erstrecken. Die vorliegenden Erfindung gestattet vorteilhaft eine Sicherung der Teileanordnung an dem ersten Bauteil mithilfe des Außengewinderest, auch wenn dieser sich nicht oder nicht wesentlich (d.h. zumindest nicht so weit, dass noch eine Sicherung der Teileanordnung mittels einer Mutter möglich ist) über die Teileanordnung hinaus erstreckt.

Gemäß einer Ausführungsform ist der Stehbolzen unterhalb einer verlorenen Mutter oder angrenzend an diese abgebrochen, wobei die verlorene Mutter an einem samt Mutter verlorenen Stehbolzenabschnitt befestigt war oder ist. Das Reparaturschraubelement kann nämlich insbesondere die Sicherungs- oder Haltefunktion der verlorenen Mutter übernehmen.

Gemäß einer Ausführungsform erfolgt das Verschrauben derart, dass das Hülseninnengewinde innerhalb der Teileanordnung und/oder zwischen der Teileanordnung und dem ersten Bauteil mit dem Außengewinderest in Gewindeeingriff gebracht wird.

In einer weiteren möglichen Ausführungsform des Verfahrens wird zum Bereitstellen des Reparaturschraubelements ein Kopf-Bolzen-Element eingesetzt, das einen Kopfanteil und einen damit verbundenen Bolzenanteil aufweist. Im Bolzenanteil wird das Hülseninnengewinde gebildet; falls erforderlich, also wenn der Bolzenanteil keine oder eine zu kleine Bohrung aufweist, wird zuvor eine axiale Bohrung in den Bolzenanteil gesetzt, in der das Hülseninnengewinde gebildet wird. Die Schraubelementhülse des Reparaturschraubelements wird also durch den das Hülseninnengewinde aufweisenden Bolzenanteil des Kopf-Bolzen-Elements gebildet. Insbesondere wird der Schraubelementkopf des Reparaturschraubelements durch den Kopfanteil des Kopf-Bolzen-Elements gebildet. In einer möglichen Weiterbildung hierzu wird eine handelsübliche Kopfschraube als das Kopf-Bolzen-Element eingesetzt, wobei der Bolzenanteil - und infolgedessen die Schraubelementhülse des Reparaturschraubelements - aus einem Außengewindebolzen der Kopfschraube gebildet wird. Hierzu wird im Außengewindebolzen das Hülseninnengewinde gebildet; falls erforderlich wird der Außengewindebolzen hohlgebohrt, und in der Bohrung des Außengewindebolzens wird das Hülseninnengewinde gebildet. Insbesondere wird ein Schraubenkopf der Kopfschraube als der Schraubelementkopf des Reparaturschraubelements genutzt. Durch die Nutzung von einfach verfügbaren oder einfach herstellbaren Maschinenelementen wie dem Kopf-Bolzen-Element bzw. der handelsüblichen Kopfschraube kann das Reparaturschraubelement besonders aufwandsarm bereitgestellt werden.

Einer weiteren möglichen Ausgestaltung des Verfahrens zufolge wird zum Bereitstellen des Reparaturschraubelements bzw. unter dem Bereitstellen des Reparaturschraubelements die Schraubelementhülse bedarfsgerecht gekürzt. So wird vermieden, dass das Reparaturschraubelement mit dessen distalen Ende, das das freie Schraubelementhülsenende ist, am Fuß des Stehbolzenrests beim Herstellen der reparierten Befestigungsanordnung an das erste Bauteil axial anstößt. Denn dann ließe das Reparaturschraubelement sich nicht weit genug auf den Stehbolzenrest aufschrauben, wodurch die Teileanordnung nicht oder nicht stark genug zwischen dem Schraubelementkopf und dem ersten Bauteil eingespannt wäre. Folglich wird durch das bedarfsgerechte Kürzen der Schraubelementhülse effizient und besonders aufwandsarm gewährleistet, dass beim Reparieren der beschädigten Befestigungsanordnung die Teileanordnung sicher und in gewünschtem Maße stark zwischen dem Schraubelementkopf und dem ersten Bauteil eingespannt wird.

Es ist in einer weiteren möglichen Ausführungsform des Verfahrens vorgesehen, dass vor dem Bilden der Reparaturgewindeverbindung eine Öffnung oder zwei oder mehr Öffnungen der Öffnungsanordnung mittels eines spanenden und/oder spanlosen Bearbeitungsprozesses an einen Außendurchmesser der Schraubelementhülse angepasst wird/werden. Dies ist insbesondere bei Teilen der Teileanordnung erforderlich, deren Öffnung, durch welche der Stehbolzen sich bei der unbeschädigten Befestigungsanordnung hindurcherstreckt hat, ein Öffnungsmaß (zum Beispiel einen Öffnungsdurchmesser bei kreisrunder Öffnung oder eine Öffnungsbreite bei einem Langloch) aufweist, das so groß oder nur unwesentlich größer als ein Stehbolzenaußendurchmesser des Stehbolzens ist. Denn die Schraubelementhülse umschließt den Stehbolzenrest außenumfangsseitig, was bedeutet, dass deren Schraubelementhülsenaußendurchmesser größer als der Stehbolzenaußendurchmesser ist. Es ist also das Anpassen der Öffnung oder Öffnungen insbesondere dann erforderlich, wenn die Schraubelementhülse aufgrund deren zu großen Schraubelementhülsenaußendurchmessers nicht axial durch die entsprechende originale Öffnung hindurchgeführt werden kann. Das Anpassen der entsprechenden Öffnung kann zum Beispiel durch Aufbohren, Aufschneiden, Aufbördeln etc. erfolgen. So kann zum Reparieren der Befestigungsanordnung das Reparaturschraubelement besonders einfach durch die Teile- bzw. Öffnungsanordnung geführt werden.

Gemäß einer weiteren möglichen Ausführungsform des Verfahrens wird vor dem Bilden der Reparaturgewindeverbindung ein Teil oder werden zwei oder mehr Teile der Teileanordnung gegen ein entsprechendes Reparaturteil ausgetauscht, das mit einer Öffnung für die Öffnungsanordnung der reparierten Befestigungsanordnung hergestellt ist. Die Öffnung des Reparaturteils korrespondiert mit dem Schraubelementhülsenaußendurchmesser, sodass die Schraubelementhülse ohne Weiteres axial durch die Öffnung des Reparaturteils hindurchgeführt werden kann. Das Austauschen des Originalteils bzw. der Originalteile der unbeschädigten Befestigungsanordnung bietet sich insbesondere dann an, wenn das entsprechende Originalteil ohne großen Aufwand aus der Teileanordnung bzw. aus der Befestigungsanordnung ausgebaut werden kann, etwa wenn es bereits bei beschädigter Befestigungsanordnung vollkommen lose ist und nur noch abgenommen werden braucht. Dann kann vorteilhafterweise auf ein spanendes/spanloses Bearbeiten des aufwandsarm austauschbaren Originalteils verzichtet werden, was den schnellen Abschluss der Reparatur der beschädigten Befestigungseinrichtung noch weiter begünstigt. Es ist hinsichtlich der im vorstehenden Absatz beschriebenen Ausführungsform beispielsweise zu verstehen, das eines oder mehr der Teile der Teileanordnung spanend und/oder spanlos bearbeitet werden kann/können, und eines oder mehr der anderen Teile derselben Teileanordnung gegen ein entsprechendes Reparaturteil ausgetauscht werden kann/können.

Das Verfahren weist einer möglichen Weiterbildung zufolge einen weiteren Verfahrensschritt auf, in welchem nach dem Bilden der Reparaturgewindeverbindung das Reparaturschraubelement mittels einer Verdrehsicherung gegen ein Verdrehen gesperrt wird. Insbesondere wird die Verdrehsicherung als formschlüssig wirkende Verdrehsicherung ausgebildet. Die Verdrehsicherung wird zum Beispiel so ausgeführt, dass sie formschlüssig zwischen der Teileanordnung und dem Kopfanteil des Reparaturschraubelements wirkt, wodurch das Reparaturschraubelement, insbesondere dessen Schraubelementkopf, mittels der Verdrehsicherung formschlüssig an der Teileanordnung drehfest blockiert ist. Es kann beispielsweise vorgesehen sein, dass ein Sicherungskabel (etwa ein Draht) durch eine Sicherungsöffnung des Schraubelementkopfs hindurchgeführt und an ein an der Teileanordnung oder andernorts fixiertes Sicherungselement gespannt wird. Dadurch wird die Reparaturgewindeverbindung bzw. das Reparaturschraubelement besonders zuverlässig gegen unerwünschtes Lösen gesperrt, wodurch die reparierte Befestigungseinrichtung noch sicherer ist.

Eine mögliche Weiterbildung sieht vor, dass die Verdrehsicherung gebildet wird, indem eine Reparaturunterlegscheibe eingesetzt wird, welche zwei Formschlusselemente aufweist. Dabei wird die Verdrehsicherung so gebildet, dass bei hergestellter Reparaturgewindeverbindung eines der Formschlusselemente in eine erste Formschlusselementaufnahme des Reparaturschraubelements, insbesondere des Schraubelementkopfs, formschlüssig eingreift, wohingegen das andere der Formschlusselemente in eine zweite Formschlusselementaufnahme der Teileanordnung formschlüssig eingreift. Die erste Formschlusselementaufnahme ist also fest mit dem Reparaturschraubelement, insbesondere mit dessen Schraubelementkopf, verbunden, wobei die zweite Formschlusselementaufnahme fest mit der Teileanordnung verbunden ist. Die Reparaturunterlegscheibe weist als Formschlusselemente beispielsweise sich nach radial außen erstreckende Laschen auf, die nach dem Bilden der Reparaturgewindeverbindung in die entsprechend zugehörige Formschlusselementaufnahme hineingebogen werden. Mittels der Reparaturunterlegscheibe kann die Verdrehsicherung zum einen vorteilhafterweise besonders nah am Reparaturschraubelement gebildet werden, und zum anderen kann - abgesehen vom mit dem Formschlusselement der Reparaturunterlegscheibe in Verbindung stehenden Teil der Teileanordnung - auf ein Umbauen oder Austauschen einer weiteren Komponente der Befestigungsanordnung verzichtet werden. Eine originale Unterlegscheibe und die Reparaturunterlegscheibe können beide in der reparierten Befestigungsanordnung eingesetzt werden. Ferner ist es denkbar, dass die originale Unterlegscheibe der Befestigungsanordnung gegen die Reparaturunterlegscheibe getauscht wird, also dass die Reparaturunterlegscheibe anstelle der originalen Unterlegscheibe eingebaut wird. Bei letzterem kommt es nicht zu einer axialen Vergrößerung der reparierten Befestigungsanordnung verglichen mit der ursprünglichen Befestigungsanordnung.

Bei einer weiteren möglichen Ausgestaltung des Verfahrens wird es an einem Triebwerk eines Flugzeugs angewendet, wobei während des Reparierens der Befestigungsanordnung das Triebwerk in dessen bestimmungsgemäßer Einbaulage am/im Flugzeug montiert bleibt. Anders ausgedrückt: Das Verfahren wird zur sogenannten On-Wing-Reparatur des Triebwerks, insbesondere dessen Befestigungsanordnung, eingesetzt. Das Triebwerk weist insbesondere eine Strömungsmaschine auf. Es ist von signifikantem Vorteil, wenn das Verfahren als On-Wing-Reparatur-Verfahren eingesetzt wird, da bei der On-Wing-Reparatur das Triebwerk nicht aus dem Flugzeug ausgebaut bzw. nicht vom Flugzeugflügel abgebaut wird. Dadurch kann die Reparatur der Befestigungsanordnung besonders schnell erledigt werden, und folglich ist eine unerwünschte, insbesondere ungeplante Nichtflugzeit des Triebwerks bzw. des Flugzeugs besonders gering. Insbesondere wird das Verfahren an einer ACC-Gehäuse-Anordnung des Triebwerks angewendet (ACC: active clearance control, manchmal auch active tip-clearance control - aktive Turbinenblattspitzenspielregelung), wobei in der unbeschädigten Befestigungsanordnung eine Komponente der ACC-Gehäuse-Anordnung, insbesondere eine Luftkanaleinrichtung der ACC-Gehäuse-Anordnung, an einem Innengehäuse des Triebwerks befestigt ist. Insbesondere ist durch das Innengehäuse das erste Bauteil der Befestigungsanordnung gebildet, wobei der Stehbolzen und das Innengehäuse kraft-, form- und/oder stoffschlüssig miteinander verbunden sind. Beispielsweise kann der Stehbolzen sich von einem Inneren des Innengehäuses durch eine Stehbolzenöffnung des Innengehäuses hindurch nach radial außen erstrecken, wobei er mit dessen Außengewinde eine Außenumfangsfläche des Innengehäuses überragt. Dabei können der Stehbolzen und die Stehbolzenöffnung beispielsweise mittels Kaltdehnens/Eindehnens miteinander verbunden sein. Andere Ausführungsformen der Verbindung zwischen dem Innengehäuse und dem Stehbolzen sind natürlich denkbar, etwa eine Schweißverbindung, eine Schraubverbindung etc. Insbesondere, wenn der Stehbolzen - beispielsweise aufgrund eines Stehbolzenkopfs - nur nach radial innen vom Innengehäuse getrennt werden kann, ist es zum Austauchen des beschädigten Stehbolzens erforderlich, das Triebwerk zum einen vom Flugzeug abzumontieren und zum anderen zumindest so weit zu zerlegen, dass der Stehbolzen im Innengehäuse erreicht und ausgebaut werden kann, was erheblich aufwändig ist. Durch das Verfahren kann auf das Austauschen des Stehbolzens verzichtet werden. Infolgedessen ist es auch nicht erforderlich, zum Reparieren des Triebwerks, insbesondere dessen ACC-Gehäuse-Anordnung, es weiter zu zerlegen als zum Erreichen des Stehbolzenrests erforderlich. Besondere Aufmerksamkeit ist darauf zu legen, dass das Triebwerk vorteilhafterweise nicht vom Flugzeug abmontiert werden muss.

Durch das Reparaturkit, das beim vorstehend beschriebenen Verfahren zum Reparieren der Befestigungsanordnung bzw. zum Herstellen der reparierten Befestigungsanordnung aus der beschädigten Befestigungsanordnung eingesetzt wird, ist ein weiterer erfindungsgemäßer Gegenstand gebildet. Das Reparaturkit weist ein Reparaturkitelement oder zwei oder mehr Reparaturkitelemente auf. Als erstes Reparaturkitelement weist das Reparaturkit das Reparaturschraubelement auf.

Einer möglichen Weiterbildung zufolge weist das Reparaturkit zudem eines oder mehr der folgenden weiteren Reparaturkitelemente auf:
- Ein Reparaturabstandshalterelement, das dazu eingerichtet ist, ein originales Abstandshalterelement der unbeschädigten Befestigungsanordnung zu ersetzen.
- Eine Reparaturringscheibe, die dazu eingerichtet ist, eine originale Unterlegscheibe der unbeschädigten Befestigungsanordnung zu ersetzen. Die Reparaturringscheibe kann als die Reparaturunterlegscheibe ausgebildet sein, also die Formschlusselemente der Verdrehsicherung aufweisen.
- Ein Reparaturspannfederelement, das dazu eingerichtet ist, ein originales Spannfederelement der unbeschädigten Befestigungsanordnung zu ersetzen. Insbesondere ist das Spannfederelement als eine Tellerringfeder ausgebildet, welche die axiale Verspannung der Teileanordnung zwischen dem ersten Bauteil und der Innengewindemutter der ursprünglichen Befestigungsanordnung unterstützt.
- Ein Reparaturteil, das dazu eingerichtet ist, ein Teil der originalen Teileanordnung der unbeschädigten Befestigungsanordnung zu ersetzen. Insbesondere handelt es sich bei dem Teil um eine Komponente der ACC-Gehäuse-Anordnung.

Ein weiterer Aspekt der Erfindung betrifft die reparierte Befestigungsanordnung, die den abgebrochenen Stehbolzen - also den Stehbolzenrest - und das Reparaturkit aufweist. Insbesondere ist zwischen dem Reparaturschraubelement des Reparaturkits und den Stehbolzenrest die Reparaturgewindeverbindung gebildet.

Bei der reparierte Befestigungsanordnung kann der Stehbolzenrest mit einem oder dem vorgenannten ersten Bauteil verbunden sein. Über das Reparaturschraubelement und über den Stehbolzenrest kann zwischen dem ersten Bauteil und einem oder dem vorgenannten Schraubelementkopf des Reparaturschraubelements eine oder die vorgenannte Teileanordnung eingespannt sein.

Noch ein weiterer Aspekt der Erfindung bezieht sich auf ein Triebwerk für ein Flugzeug, wobei das Triebwerk insbesondere eine Strömungsmaschine umfasst. Insbesondere ist das Triebwerk als ein Turbofantriebwerk mit Getriebeübersetzung zwischen einer Niederdruckwelle und einer Fanwelle ausgeführt. Solche Triebwerke werden auch als Getriebefan-Triebwerke oder als geared turbo fan (GTF) bezeichnet. Das Triebwerk weist die reparierte Befestigungsanordnung auf, wobei insbesondere die Reparaturgewindeverbindung herstellbar oder lösbar ist, während das Triebwerk an einem Flugzeugflügel angebracht ist, also "on-wing". Das Triebwerk kann zwei oder mehr Befestigungseinrichtungen aufweisen, wobei eine oder mehr der Befestigungseinrichtungen original, also unbeschädigt ist/sind, und eine oder mehr der Befestigungseinrichtungen repariert ist/sind, also den Stehbolzenrest und das Reparaturkit bzw. das Reparaturschraubelement aufweist/aufweisen.

Weitere Merkmale ergeben sich aus der nachfolgenden Beschreibung im Zusammenhang mit den Figuren. Es zeigt
- Fig. 1: eine schematische und geschnittene Explosionsansicht einer reparierten Befestigungsanordnung und
- Fig. 2: eine schematische und geschnittene Darstellung der reparierten Befestigungsanordnung in zusammengebautem Zustand.

Im Folgenden werden ein Verfahren und ein Reparaturkit 1 zum Herstellen einer reparierten Befestigungsanordnung 2 sowie die reparierte Befestigungsanordnung 2 und ein die reparierte Befestigungsanordnung 2 aufweisendes Triebwerk 3 für ein Flugzeug in gemeinsamer Beschreibung erläutert. Dabei sind gleiche und funktionsgleiche Elemente mit gleichem Bezugszeichen versehen.

Fig. 1 zeigt eine Explosionsansicht der reparierten Befestigungsanordnung 2, und Fig. 2 zeigt eine schematische und geschnittene Darstellung der reparierten Befestigungsanordnung 2 in zusammengebautem Zustand. Aus einer originalen bzw. unbeschädigten Befestigungsanordnung (nicht dargestellt) wird mithilfe des Verfahrens bzw. mithilfe des Reparaturkits 1 die reparierte Befestigungsanordnung 2 hergestellt. Die reparierte Befestigungsanordnung 2 weist ein erstes Bauteil 4 auf, an welchem ein Stehbolzenrest 5 fixiert ist, welcher von einem Stehbolzen (nicht dargestellt) stammt, der abgebrochen oder abgerissen ist. Der Stehbolzenrest 5 ist vorliegend in eine Stehbolzenöffnung 6 des ersten Bauteils 4 eingedehnt. Des Weiteren ist zu erkennen, dass der Stehbolzenrest 5 bzw. der vormalige Stehbolzen einen Stehbolzenkopf 7 aufweist, und somit nur in einer Richtung vom ersten Bauteil 4 entfernt werden kann. Der Stehbolzenrest 5 weist einen Außengewinderest 8 auf. In **Fig. 1** und **Fig. 2** ist ferner eine Teileanordnung 9 dargestellt, deren Teile 10 mittels der unbeschädigten Befestigungsanordnung am ersten Bauteil 4 befestigt waren und/oder mittels der reparierten Befestigungsanordnung 2 am ersten Bauteil 4 befestigt werden (siehe **Fig. 2**). Beim ersten Bauteil 4 handelt es sich vorliegend um ein Innengehäuse 11 des Triebwerks 3, wobei die Teileanordnung 9 - als jeweiliges Teil 10 - zumindest eine Luftkanaleinrichtung 12 und einen Befestigungsstreifen 13 einer ACC-Gehäuse-Anordnung des Triebwerks 3 aufweist.

Die reparierte Befestigungsanordnung 2 weist zusätzlich zum abgebrochenen Stehbolzen bzw. zum Stehbolzenrest 5 das Reparaturkit 1 auf, welches ein Reparaturschraubelement 14 aufweist. Vorliegend weist das Reparaturkit 1 zudem ein weiteres Reparaturkitelement 15, nämlich ein Reparaturabstandshalterelement 16, auf, welches ein originales Abstandshalterelement (nicht dargestellt) der unbeschädigten Befestigungsanordnung ersetzt. Ein weiteres Reparaturkitelement 15 des Reparaturkits 1 ist gemäß dem vorliegenden Beispiel durch eine Reparaturringscheibe 17 gebildet. Hier im Beispiel weist die reparierte Befestigungsanordnung 2 zwei oder zwei oder mehr Reparaturringscheiben 17 auf, wobei die jeweilige Reparaturringscheibe 17 eine originale Unterlegscheibe (nicht dargestellt) der unbeschädigten Befestigungsanordnung ersetzt. Darüber hinaus umfasst das Reparaturkit 1 vorliegend ein Reparaturspannfederelement 18 als weiteres Reparaturkitelement 15, das ein originales Spannfederelement (nicht dargestellt) der unbeschädigten Befestigungsanordnung ersetzt. Bei einem oder mehr der Teile 10 kann es sich um ein jeweiliges Reparaturteil 19 handeln, wobei das jeweilige Reparaturteil 19 ein weiteres Reparaturkitelement 15 des Reparaturkits 1 bildet. Das jeweilige Reparaturteil 19 ist dazu eingerichtet, in der reparierten Befestigungsanordnung 2 das entsprechende Teil 10 der Teileanordnung 9 zu ersetzen. Eines, einige oder alle der Teile 10 können also in der reparierten Befestigungsanordnung 2 wieder- bzw. weiterverwendet oder gegen ein entsprechendes Reparaturteil 19 getauscht werden. Bei den Reparaturkitelementen 15 handelt es sich hier im Beispiel jeweils um ein Teil 10 der Teileanordnung 9.

In einem Schritt S1 des Verfahrens wird das Reparaturschraubelement 14 des Reparaturkits 1 mit einer Schraubelementhülse 20 und einem damit fest verbundenen Schraubelementkopf 21 bereitgestellt. Dabei sind/werden die Schraubelementhülse 20 und der Schraubelementkopf 21 kraft-, form- und/oder stoffschlüssig miteinander verbunden, vorliegend einstückig miteinander ausgebildet. Die Schraubelementhülse 20 wird länglich, beispielsweise mindestens so lang wie eine Innengewindemutter der originalen Befestigungsanordnung oder länger ausgeführt. Ferner wird die Schraubelementhülse 20 mit einem Hülseninnengewinde 22 bereitgestellt, das zum Bilden einer Reparaturgewindeverbindung 23 (siehe **Fig. 2**) mit dem Außengewinderest 8 des Stehbolzenrests 5 korrespondiert. Ferner wird beim Bereitstellen des Reparaturschraubelements 14 dessen Schraubelementhülse 20 je nach Bedarf gekürzt, zum Beispiel abgedreht. Insbesondere wird das Reparaturschraubelement 14 bereitgestellt, indem ein Kopf-Bolzen-Element 24 bereitgestellt wird, das einen Kopfanteil 25 und einen damit verbundenen Bolzenanteil 26 aufweist, in welchem das Hülseninnengewinde 22 gebildet wird. Vorliegend wird das Kopf-Bolzen-Element 24 als handelsübliche Kopfschraube 27 bereitgestellt, wobei der Bolzenanteil 26 - und infolgedessen die Schraubelementhülse 20 des Reparaturschraubelements 14 - aus einem Außengewindebolzen 28 der Kopfschraube 27 gebildet wird. Durch einen Schraubenkopf 29 der Kopfschraube 27 wird dann der Kopfanteil 25 bzw. der Schraubelementkopf 21 des Reparaturschraubelements 14 gebildet.

Es geht aus **Fig. 1** und **Fig. 2** weiter hervor, dass die Teile 10 jeweils eine Öffnung 30 aufweisen, wobei die Öffnungen 30 miteinander eine Öffnungsanordnung 31 der Teileanordnung 9 bilden. Aus Übersichtlichkeitsgründen ist die Öffnungsanordnung 31 bzw. sind die Öffnungen 30 in **Fig. 2** nicht mit den entsprechenden Bezugszeichen versehen. Der Stehbolzenrest 5 erstreckt sich durch die Öffnungen 30 bzw. Öffnungsanordnung 31 hindurch. Kommt es dazu, dass eine Öffnung 30 zu klein ist, als dass die Schraubelementhülse 20 axial hindurchgeführt werden kann, wird im vorliegenden Beispiel vor dem Bilden der Reparaturgewindeverbindung 23 die entsprechende Öffnung 30 an einen Außendurchmesser der Schraubelementhülse 20 angepasst. Dies kann zum Beispiel geschehen, indem die entsprechende Öffnung 30 mittels eines spanenden und/oder spanlosen Bearbeitungsprozesses an den Außendurchmesser der Schraubelementhülse 20 angepasst wird. Ferner kann das Anpassen der Öffnung 30 geschehen, indem das Teil 10 mit der zu kleinen Öffnung 30 gegen das entsprechende Reparaturteil 19 ausgetauscht wird, das mit der ausreichend großen Öffnung 30 für die Öffnungsanordnung 31 der reparierten Befestigungsanordnung 2 hergestellt ist.

In einem weiteren Schritt S2 des Verfahrens wird dann zwischen dem Außengewinderest 8 und dem Reparaturschraubelement 14 die Reparaturgewindeverbindung 23 gebildet, indem die Schraubelementhülse 20 durch die Öffnungsanordnung 31 der Teileanordnung 9 hindurch und mittels des Hülseninnengewindes 22 mit dem Außengewinderest 8 verschraubt wird. Dadurch wird die Teileanordnung 9 zwischen dem Schraubelementkopf 21 des Reparaturschraubelements 14 und dem ersten Bauteil 4 der reparierten Befestigungsanordnung 2 eingespannt. Dabei bleiben der Stehbolzenrest 5 und das erste Bauteil 4 während des Reparierens der beschädigten Befestigungsanordnung - also während des Herstellens der reparierten Befestigungsanordnung 2 - miteinander verbunden. Es wird durch den Stehbolzenrest 5 ein Bestandteil der reparierten Befestigungsanordnung 2 gebildet. Der abgebrochene Stehbolzen bzw. der Stehbolzenrest 5 wird also nicht gegen einen neuen Stehbolzen ersetzt. Bei der reparierten Befestigungsanordnung 2 ist zwischen dem Reparaturschraubelement 14 und dem Stehbolzenrest 5 die Reparaturgewindeverbindung 23 gebildet.

Im vorliegenden Beispiel ist des Weiteren vorgesehen, dass einem weiteren Schritt S3 des Verfahrens eine Verdrehsicherung gebildet wird, mittels derer die Reparaturgewindeverbindung 23 gegen ein unbeabsichtigtes Lösen gesperrt wird. Die Verdrehsicherung wird hier als formschlüssig wirkende Verdrehsicherung ausgebildet, beispielsweise mithilfe eines Sicherungskabels, das durch eine Sicherungsöffnung des Schraubelementkopfs hindurchgeführt und an ein an der Teileanordnung 9 oder andernorts fixiertes Sicherungselement gespannt wird. Alternativ oder zusätzlich kann die Verdrehsicherung eine Reparaturunterlegscheibe mit zwei jeweils als eine Lasche ausgebildeten Formschlusselementen sowie eine am Schraubelementkopf 21 fixierte, erste Formschlusselementaufnahme und eine an der Teileanordnung 9 fixierte, zweite Formschlusselementaufnahme aufweisen. Dann wird die Verdrehsicherung gebildet, indem bei hergestellter Reparaturgewindeverbindung 23 eine der Laschen in die erste Formschlusselementaufnahme und die andere der Laschen in die zweite Formschlusselementaufnahme hineingebogen wird. Es ist insbesondere vorgesehen, dass die Reparaturringscheibe 17 als die Reparaturunterlegscheibe ausgebildet ist.

Das Verfahren wird gemäß dem vorliegenden Beispiel am Triebwerk 3 eines Flugzeugs angewendet, während dieses in dessen bestimmungsgemäßer Einbaulage am/im Flugzeug montiert, insbesondere an einem Flügel des Flugzeugs aufgehängt bleibt. Anders ausgedrückt: Das Verfahren wird zur sogenannten On-Wing-Reparatur des Triebwerks 3, insbesondere der ACC-Gehäuse-Anordnung, eingesetzt.

Das Triebwerk 3 umfasst insbesondere eine Strömungsmaschine, die beispielsweise als eine Niederdruck-Gasturbine ausgebildet ist. Vorliegend ist das Triebwerk 3 als ein Turbofantriebwerk mit Getriebeübersetzung zwischen einer Niederdruckwelle und einer Fanwelle ausgeführt, das heißt als ein Getriebefan-Triebwerk bzw. geared turbo fan (GTF). Das Triebwerk 3 weist die reparierte Befestigungsanordnung 2 auf, wobei die Reparaturgewindeverbindung 23 herstellbar oder lösbar ist, während das Triebwerk 3 am Flugzeugflügel angebracht ist, also "on-wing". Das Triebwerk 3 kann zwei oder mehr Befestigungseinrichtungen aufweisen, wobei eine oder mehr der Befestigungseinrichtungen original, also unbeschädigt ist/sind, und eine oder mehr der Befestigungseinrichtungen repariert ist/sind, also den Stehbolzenrest 5 und das Reparaturkit 1 bzw. das Reparaturschraubelement 14 aufweist/aufweisen.

Durch das Verfahren, durch das Reparaturkit 1, durch die reparierte Befestigungsanordnung 2 und durch das Triebwerk 3 ist eine jeweilige Möglichkeit aufgezeigt, wie die eingangs erläuterte Aufgabe, eine beschädigte Befestigungsanordnung, insbesondere in/an einem Flugzeug, möglichst effizient zu reparieren, gelöst wird.

### BEZUGSZEICHENLISTE

- 1: Reparaturkit
- 2: reparierte Befestigungsanordnung
- 3: Triebwerk
- 4: erstes Bauteil
- 5: Stehbolzenrest
- 6: Stehbolzenöffnung
- 7: Stehbolzenkopf
- 8: Außengewinderest
- 9: Teileanordnung
- 10: Teil
- 11: Innengehäuse
- 12: Luftkanaleinrichtung
- 13: Befestigungsstreifen
- 14: Reparaturschraubelement
- 15: Reparaturkitelement
- 16: Reparaturabstandshalterelement
- 17: Reparaturringscheibe
- 18: Reparaturspannfederelement
- 19: Reparaturteil
- 20: Schraubelementhülse
- 21: Schraubelementkopf
- 22: Hülseninnengewinde
- 23: Reparaturgewindeverbindung
- 24: Kopf-Bolzen-Element
- 25: Kopfanteil
- 26: Bolzenanteil
- 27: Kopfschraube
- 28: Außengewindebolzen
- 29: Schraubenkopf
- 30: Öffnung
- 31: Öffnungsanordnung

## Patentansprüche

1. Verfahren zum Reparieren einer Befestigungsanordnung mittels eines ein Reparaturschraubelement (14) aufweisenden Reparaturkits (1), wobei ein mit einem ersten Bauteil (4) der Befestigungsanordnung verbundener Stehbolzen der Befestigungsanordnung abgebrochen ist, wobei
S1 das Reparaturschraubelement (14) des Reparaturkits (1) mit einer Schraubelementhülse (20) und einem damit verbundenen Schraubelementkopf (21) bereitgestellt wird, und ein Hülseninnengewinde (22) der Schraubelementhülse (20) zum Bilden einer Reparaturgewindeverbindung (23) mit einem Außengewinderest (8) eines Stehbolzenrests (5) des vormaligen Stehbolzens korrespondiert,
S2 zwischen dem Außengewinderest (8) und dem Reparaturschraubelement (14) die Reparaturgewindeverbindung (23) gebildet wird, indem die Schraubelementhülse (20) durch eine Öffnungsanordnung (31) einer Teileanordnung (9) hindurch und mittels des Hülseninnengewindes (22) mit dem Außengewinderest (8) verschraubt wird, wobei die Teileanordnung (9) zwischen dem Schraubelementkopf (21) und dem ersten Bauteil (4) der reparierten Befestigungsanordnung (2) eingespannt wird.

2. Verfahren nach Anspruch 1, **dadurch gekennzeichnet, dass**
- der Stehbolzenrest (5) und das erste Bauteil (4) während des Reparierens der Befestigungsanordnung miteinander verbunden bleiben,
- der Außengewinderest (8) sich zumindest abschnittsweise durch die Öffnungsanordnung (31) der Teileanordnung (9) erstreckt, sich der Außengewinderest (8) aber insbesondere nicht oder nicht wesentlich über die Teileanordnung (9) hinaus erstreckt,
- der Stehbolzen unterhalb einer verlorenen Mutter oder angrenzend an diese abgebrochen ist, wobei die verlorene Mutter an einem samt Mutter verlorenen Stehbolzenabschnitt befestigt war oder ist, und insbesondere das Reparaturschraubelement (14) die Sicherungs- oder Haltefunktion der verlorenen Mutter übernimmt und/oder
- das Verschrauben so erfolgt, dass das Hülseninnengewinde (22) innerhalb der Teileanordnung (9) und/oder zwischen der Teileanordnung (9) und dem ersten Bauteil (4) mit dem Außengewinderest (8) in Gewindeeingriff gebracht wird.

3. Verfahren nach Anspruch 1 oder 2, **dadurch gekennzeichnet, dass** zum Bereitstellen des Reparaturschraubelements (14) ein Kopf-Bolzen-Element (24) eingesetzt wird, das einen Kopfanteil (25) und einen damit verbundenen Bolzenanteil (26) aufweist, in welchem das Hülseninnengewinde (22) gebildet wird, sodass die Schraubelementhülse (20) durch den das Hülseninnengewinde (22) aufweisenden Bolzenanteil (26) gebildet wird.

4. Verfahren nach Anspruch 3, **dadurch gekennzeichnet, dass** eine handelsübliche Kopfschraube (27) als das Kopf-Bolzen-Element (24) eingesetzt wird, wobei als Bolzenanteil (26) ein Außengewindebolzen (28) der Kopfschraube (27) genutzt wird, in dem das Hülseninnengewinde (22) gebildet wird.

5. Verfahren nach einem der vorhergehenden Ansprüche, **dadurch gekennzeichnet, dass** zum Bereitstellen des Reparaturschraubelements (14) die Schraubelementhülse (20) bedarfsgerecht gekürzt wird.

6. Verfahren nach einem der vorhergehenden Ansprüche, **dadurch gekennzeichnet, dass** vor dem Bilden der Reparaturgewindeverbindung (23) eine Öffnung (30) der Öffnungsanordnung (31) mittels eines spanenden und/oder spanlosen Bearbeitungsprozesses an einen Außendurchmesser der Schraubelementhülse (20) angepasst wird.

7. Verfahren nach einem der vorhergehenden Ansprüche, **dadurch gekennzeichnet, dass** vor dem Bilden der Reparaturgewindeverbindung (23) ein Teil (10) der Teileanordnung (9) gegen ein entsprechendes Reparaturteil (19) ausgetauscht wird, das mit einer mit einem Schraubelementhülsenaußendurchmesser der Schraubelementhülse (20) korrespondierenden Öffnung (30) für die Öffnungsanordnung (31) hergestellt ist.

8. Verfahren nach einem der vorhergehenden Ansprüche, **dadurch gekennzeichnet, dass**
S3 das Reparaturschraubelement (14) mittels einer Verdrehsicherung gegen ein Verdrehen gesperrt wird.

9. Verfahren nach Anspruch 8, **dadurch gekennzeichnet, dass** die Verdrehsicherung gebildet wird, indem eine Reparaturunterlegscheibe eingesetzt wird, welche zwei Formschlusselemente aufweist, derart, dass bei hergestellter Reparaturgewindeverbindung (23)
- eines der Formschlusselemente in eine erste Formschlusselementaufnahme des Reparaturschraubelements (14) eingreift,
- das andere der Formschlusselemente in eine zweite Formschlusselementaufnahme der Teileanordnung (9) eingreift.

10. Verfahren nach einem der vorhergehenden Ansprüche, **dadurch gekennzeichnet, dass** es an einem Triebwerk (3) eines Flugzeugs, insbesondere an einer ACC-Gehäuse-Anordnung davon, angewendet wird, wobei während des Reparierens der Befestigungsanordnung das Triebwerk (3) in dessen bestimmungsgemäßer Einbaulage am/im Flugzeug montiert bleibt.

11. Reparaturkit (1) zum Reparieren einer Befestigungsanordnung, das als ein Reparaturkitelement (15) ein Reparaturschraubelement (14) aufweist.

12. Reparaturkit (1) nach Anspruch 11, **dadurch gekennzeichnet, dass** es eines oder mehr der folgenden weiteren Reparaturkitelemente (15) aufweist:
- ein Reparaturabstandshalterelement (16), das dazu eingerichtet ist, ein Abstandshalterelement der Befestigungsanordnung zu ersetzen,
- eine Reparaturringscheibe (17), die dazu eingerichtet ist, eine Unterlegscheibe der Befestigungsanordnung zu ersetzen,
- ein Reparaturspannfederelement (18), das dazu eingerichtet ist, ein Spannfederelement der Befestigungsanordnung zu ersetzen,
- ein Reparaturteil (19), das dazu eingerichtet ist, ein Teil (10) der Teileanordnung (9) der Befestigungsanordnung zu ersetzen.

13. Reparierte Befestigungsanordnung (2), die einen abgebrochenen Stehbolzen und das gemäß Anspruch 11 oder 12 ausgebildete Reparaturkit (1) aufweist, wobei insbesondere zwischen dem Reparaturschraubelement (14) und einem Stehbolzenrest (5) eine Reparaturgewindeverbindung (23) gebildet ist.

14. Reparierte Befestigungsanordnung (2) nach Anspruch 13, bei welcher der Stehbolzenrest (5) mit einem ersten Bauteil (4) verbunden ist, wobei das Reparaturschraubelement (14) und über den Stehbolzenrest (5) zwischen dem ersten Bauteil (4) und einem Schraubelementkopf (21) des Reparaturschraubelements (14) eine Teileanordnung eingespannt ist.

15. Triebwerk (3) für ein Flugzeug mit einer reparierten Befestigungsanordnung (2), die gemäß Anspruch 13 oder 14 ausgebildet ist, wobei insbesondere die Reparaturgewindeverbindung (23) herstellbar oder lösbar ist, während das Triebwerk (3) an einem Flugzeugflügel angebracht ist.
